# EUROPEAN PATENT SPECIFICATION

(11) **EP 0 771 141 B1**
(45) Date of publication and mention of the grant of the patent: **02.06.1999**
(21) Application number: 95943518.1
(22) Date of filing: 06.07.1995
(51) Int. Cl.: A01G 31/00

(54) **PLANT CUBES**
PFLANZENKUBUS
CUBE DE CULTURE DE PLANTES

(30) Priority: 13.07.1994 EP 94202031
(43) Date of publication of application: 07.05.1997
(73) Proprietor: ROCKWOOL/GRODAN B.V., 6074 NH Melick-Herkenbosch (NL)
(72) Inventor: DE GROOT, Jacob Frank, 6042 KK Roermond (NL); HANSEN, Lars, 2000 Frederiksberg (DK)
(74) Representative: Prins, Hendrik Willem
(86) International application number: PCT/EP95/02698
(87) International publication number: WO 96/02128

(56) References cited:
- EP-A- 0 209 958
- WO-A-89/01736

## Description

The present invention relates to a plant cube, and in particular to a plant cube having a laminated structure of in parallel orientated mineral wool fibres. They predominantly consist of mineral wool fibres formed into a coherent matrix and mutually bonded by a cured binding agent and if appropriate impregnated with a wetting agent for rapid water uptake before use. These mineral wool fibres may be stone wool fibres, glass fibres, slag fibres and the like.

The air and water distribution within the growth cube is dependent on the hydraulic pressure over the height of the growth cube, but also dependent on the internal surface.

The internal surface is a function of the density of the growth cube, of the fibre diameter of the mineral wool fibres used and of the content of non-fibre material (shot).

Growth cubes have a total density within the range of 5-200 kg/m³, preferably between 20-180 kg/m³, more preferably 40-120 kg/m³, and practically 50-70 kg/m³.

The fibre diameter is normally within the range of 1-20 micrometer, preferably 2-10 micrometer, such as 3-8 micrometer.

The amount of shot varies between 0-50 Wt% such as 0-40 Wt%. For stone wool it is normally 30-35 Wt% and for glass wool 5-10 Wt%.

Furthermore the aspect ratio (length over diameter ratio) is normally less than 5 for shot.

The value for the internal surface varies between 5.000 and 20.000 m²/m³. A high internal surface is in the range of 16.000-20.000, low in the range of 5.000-8.000 and moderate in the range of 9.000-15.000 m²/m³.

EP-A-0 209 958 discloses a plant cube comprising a block of mineral fibres, having a top surface, a bottom surface and forside surfaces. This block comprises a laminated structure of layers of water-repellent and of water-absorbing mineral wool fibres.

The invention has for its object to provide new growth cubes which possess better properties, such as a better water distribution, a better air distribution, a better root penetration and distribution, and further a better compression or bending strength.

These new growth substrates have become available because of the use of a new technology for the production of growth substrates, that is the provision of substrates comprising at least one layer of short transversally extending fibres. Such a layer is produced by superfolding in up/downward direction of a web of mineral wool fibres within which the fibres or predominantly horizontally orientated. Accordingly there is produced a layer of in longitudinal direction zigzag-wise formed layer which is indicated within this application as a layer of short transversally mineral wool fibres. For schematic illustrations reference is made to the annexed drawings. Each fold has a width in the range of 2-50 mm, preferably 4-40 mm, such as 2-40 mm.

The present invention provides a plant cube, comprising a laminated structure of in parallel orientated mineral wool fibres which impart the plant cube with a better water spreading, water drainage, plant rooting and distribution dependent on the orientation of the mineral wool fibres in relation to the top and bottom surface.

Accordingly, the present invention provides a plant cube comprising a block of mineral fibre, having a top surface, a bottom surface and four side surfaces, which block comprises a laminated structure of in parallel orientated mineral wool fibres.

When the plant cube comprises substantially vertically orientated fibres, than the plant cube shows improves water drainage, plant root penetration and distribution. Furthermore less waste material is formed whereas there is a better contact area with the slab on which the plant cube eventually is placed during outgrowth, due to a better hydraulic contact. Furthermore this plant cube is more coherent, rigid and form stable.

When according to an alternative embodiment wherein the laminated structures comprises substantially horizontally orientated fibres, the plant cube provides a better water spreading. Therefore dependent on the type of plant to be grown on the plant cube either of the two plant cube types maybe selected.

When the plant cube wherein two mutually parallel side surfaces are formed by side layers of mineral wool fibres orientated perpendicular to the fibres of the laminated structure, then a plant cube is provided having the highest compression strength at the side layers which improves the form stability. Above that an elite plant cube is provided when in between these side layers the bottom surface is provided with a groove.

When the laminated structure is subdivided into at least two substructures by a division layer of mineral wool fibres orientated parallel to the fibres of the side surfaces, an optimum compression strength is obtained due to the presence of the compression stiff sub layer. An elite plant cube is provided when the grooves in the bottom surface extend in between a side layer and the division layer.

When the bottom surface is provided with a curing oven profile, the plant cube has a top surface which allows maximum penetration of water during dripping.

The effects of the plant cube according to the invention are maximized when the side layers and division layers have an internal surface which is higher than that of the laminated structure.

Mentioned and other advantages and features of the plant cube according to the invention will be apparent from the following description of plant cubes according to the invention, which description should not be considered as limiting the scope of the invention.

In the description reference is made to the following drawings in which
figures 1 and 2 show the production and plant cube according to the invention;
figure 3 shows the production of another plant cube according to the invention; and
figure 4 and 5 show other embodiments of plant cubes according to the invention.

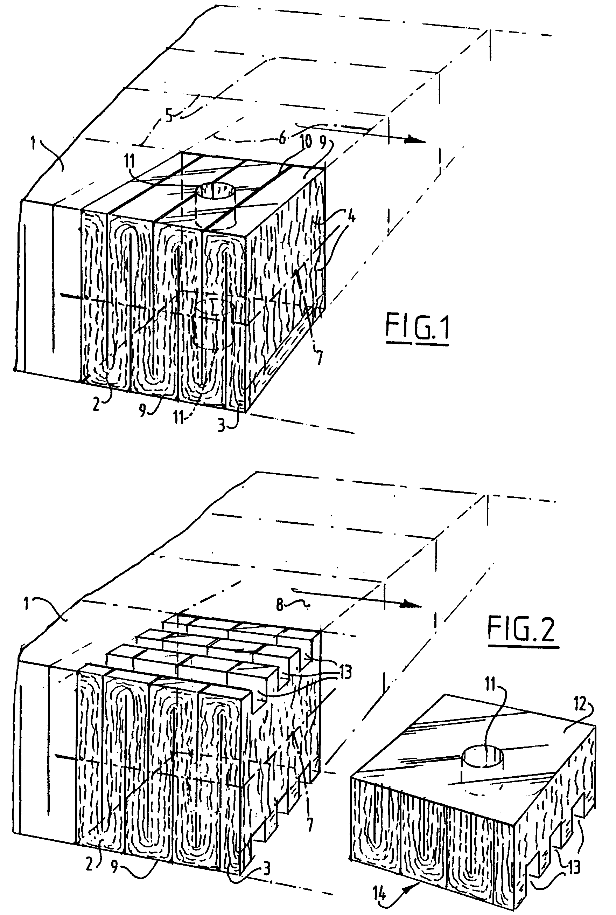

Figure 1 shows a slab 1 of a matrix of mineral fibres virtually connected by cured binding agent. This slab comprises a vertically laminated structure of a zigzag folded layer 3.

Plant cubes 4 according to the invention are formed out of the slab 1 by cutting along the cutting lines 5-7. In the outer surfaces 8 and 9 comprising the oven profile the plant openings 11 are formed. Thereby the surfaces 8 and 9 form the top surfaces of the plant cubes 4.

Figure 2 shows the same production method of the slab 1 having the laminated structure 2 of zigzagged formed layer 3, but in this case the plant openings 11 are formed in the cutting surfaces 12 formed along the cutting line 7 whereas groves 13 are formed in the outer surfaces 8 and 9 provided with the oven profile. Accordingly is formed the plant cube 14 according to the invention.

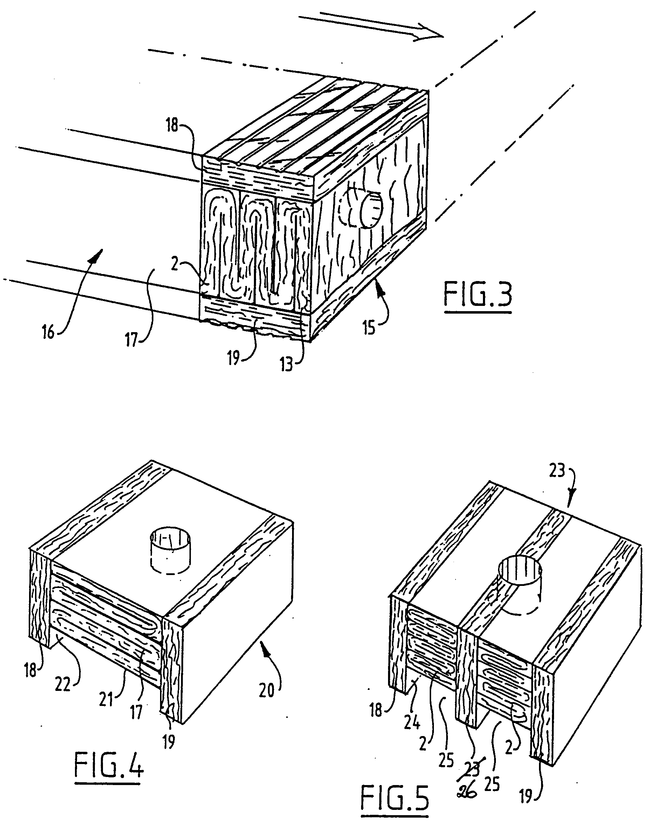

Figure 3 shows the production of another plant cube 15 according to the invention.

The slab 16 comprises a mid layer 17 having a laminated structure 2 formed by a zigzagged layer 3. The layer 17 is interposed in between two outer layers 18 and 19 in which the fibres are orientated perpendicular to those of the layer 17. The slab 16 is formed by merging the layer 17 and the layers 18 and 19 after the pre layer 17 was superfolded.

Figure 4 shows another plant cube 20 according to the invention which differs from the plant cube 15 in that the bottom surface 21 is provided with a groove 22 formed in between two side layers 18 and 19.

Finally figure 5 shows a plant cube 23 comprising two structures 2, two outer layers 18 and 19 and in between the two structures 2 a division layer 23. Furthermore the bottom surface 24 is provided with grooves 25 extending between a side layer 18 or 19 and a division layer 26.

As shown in figures 1 and 2 the structure 2 comprises mineral wool fibres extending in the plant cube vertically relative to the top surface.

In figure 3, 4 and 5 are disclosed plant cubes within which the structures 2 comprise fibres extending substantially horizontally with respect to the top and bottom surface and comprised side layers and optionally a division layer having fibres extending substantially vertically.

## Claims

1. Plant cube (4, 14, 15, 20, 23), comprising a block of mineral fibres, having a top surface (12), a bottom surface (8, 9, 24) and four side surfaces, which block comprises a laminated structure (2),
**characterized in that**
said laminated structure (2) comprises layers of in parallel orientated mineral wool fibres.

2. Plant cube (4, 14) as claimed in claim 1, wherein the laminated structure (2) comprises substantially vertically orientated fibres.

3. Plant cube (15, 20, 23) as claimed in claim 1, wherein the laminated structures (2) comprises substantially horizontally orientated fibres.

4. Plant cube (16, 23) as claimed in claim 1-3, wherein two mutually parallel side surfaces are formed by side layers (18, 19) of mineral wool fibres orientated perpendicular to the fibres of the laminated structure (2).

5. Plant cube (23) as claimed in claim 4, wherein the laminated structure (2) is subdivided into at least two substructures (2) by a division layer (26) of mineral wool fibres orientated parallel to the fibres of the side surfaces.

6. Plant cube (14, 20, 23) as claimed in claim 4 or 5, wherein the bottom surface is provided with at least one groove (13, 22, 24, 25) formed between the side layers (18, 19) or between the side layer (18, 19) and the division layer (20).

7. Plant cube (14) as claimed in claim 1-6, wherein the bottom surface (8) is provided with a curing oven profile.

8. Plant cube (15, 20, 23) as claimed in claim 1-7, wherein the side layer (18, 19) and / or the division layer (25) has an internal surface higher than that of the laminated structure (2).

## Patentansprüche

1. Pflanzenkubus (4, 14, 15, 20, 23) mit einem Block aus Mineralfasern mit einer Oberseite (12), einer Unterseite (8, 9, 24) und vier Seitenflächen, wobei der Block eine Schichtstruktur (2) aufweist,
dadurch **gekennzeichnet,** daß die Schichtstruktur (2) Schichten aus parallel ausgerichteten Mineralwollefasern aufweist.

2. Pflanzenkubus (4, 14) nach Anspruch 1, wobei die Schichtstruktur (2) im wesentlichen vertikal ausgerichtete Fasern hat.

3. Pflanzenkubus (15, 20, 23) nach Anspruch 1, wobei die Schichtstrukturen (2) im wesentlichen horizontal ausgerichtete Fasern haben.

4. Pflanzenkubus (16, 23) nach Anspruch 1 bis 3, wobei zwei zueinander parallele Seitenflachen durch Seitenschichten (18, 19) aus Mineralwollefasern gebildet sind, die rechtwinklig zu den Fasern der Schichtstruktur (2) ausgerichtet sind.

5. Pflanzenkubus (23) nach Anspruch 4, wobei die Schichtstruktur (2) durch eine Trennschicht (26) aus Mineralwollefasern, deren Fasern parallel zu den Fasern der Seitenflächen ausgerichtet sind, in wenigstens zwei Unterstrukturen (2) unterteilt ist.

6. Pflanzenkubus (14, 20, 23) nach Anspruch 4 oder 5, wobei die Unterseite mit wenigstens einer Nut (13, 22, 24, 25) versehen ist, die zwischen den Schichten (18, 19) oder zwischen der Seitenschicht (18, 19) und der Trennschicht (20) ausgebildet ist.

7. Pflanzenkubus (14) nach Anspruch 1 bis 6, wobei die Unterseite (8) mit einem Aushartofenprofil versehen ist.

8. Pflanzenkubus (15, 20, 23) nach Anspruch 1 bis 7, wobei die Seitenschicht (18, 19) und/oder die Trennschicht (25) eine Innenfläche höher als die Schichtstruktur (2) hat.

## Revendications

1. Cube pour plantes (4, 14, 15, 20, 23) comprenant un bloc de fibres minérales, présentant une surface supérieure (12), une surface de fond (8, 9, 24) et quatre surfaces latérales, lequel bloc comprend une structure en coucnes (2),
caractérisé en ce que
ladite structure en couches (2) comprend des couches de fibres de laine minérale orientées de manière parallèle.

2. Cube pour plantes (4, 14) selon la revendication 1, selon lequel la structure en couches (2) comprend des fibres orientées de manière sensiblement verticale.

3. Cube pour plantes (15, 20, 23) selon la revendication 1, selon lequel les structures en couches (2) comprennent des fibres orientées de manière sensiblement horizontale.

4. Cube pour plantes (16, 23) selon la revendication 1 à 3, selon lequel les deux surfaces latérales, mutuellement parallèles, sont formées par des couches latérales (18, 19) de fibres de laine minérale, orientées de manière perpendiculaire aux fibres de la structure en couches (2).

5. Cube pour plantes (23) selon la revendication 4, selon lequel la structure en couches (2) est sous-divisée en au moins deux sous-structures (2) par une couche de division (26) de fibres de laine minérale, orientées de manière parallèle aux fibres des surfaces latérales.

6. Cube pour plantes (14, 20, 23) selon la revendication 4 ou la revendication 5, selon lequel la surface de fond est pourvue d'au moins une rainure (13, 22, 24, 25) formée entre les couches latérales (18, 19) ou entre la couche latérale (18, 19) et la couche de division (20).

7. Cube pour plantes (14) selon les revendications 1 à 6, selon lequel la surface de fond (8) est pourvue d'un film durci en étuve.

8. Cube pour plantes (15, 20, 23) selon les revendications 1 à 7, selon lequel la couche latérale (18, 19) et/ou la couche de division (25) présente une surface interne plus importante que celle de la structure en couches (2).
